# EUROPEAN PATENT SPECIFICATION

(11) **EP 2 915 648 B1**
(45) Date of publication and mention of the grant of the patent: **10.10.2018**
(21) Application number: 13851364.3
(22) Date of filing: 25.10.2013
(51) Int. Cl.: B30B 15/06, B30B 15/34, B32B 25/02, B29K 21/00, B29K 105/08

(54) **CUSHIONING MATERIAL FOR HOT PRESSING**
POLSTERMATERIAL ZUM HEISSPRESSEN
MATÉRIAU AMORTISSEUR POUR PRESSE À CHAUD

(30) Priority: 31.10.2012 JP 2012240113
(43) Date of publication of application: 09.09.2015
(73) Proprietor: Yamauchi Corporation, Hirakata-shi, Osaka 573-1132 (JP)
(72) Inventor: OZEKI, Takamitsu, Hirakata-shi Osaka 573-1132 (JP); YOSHIDA, Akira, Hirakata-shi Osaka 573-1132 (JP); HOSHINO, Shigeo, Hirakata-shi Osaka 573-1132 (JP)
(74) Representative: Müller Hoffmann & Partner
(86) International application number: PCT/JP2013/078938
(87) International publication number: WO 2014/069355

(56) References cited:
- EP-A1- 1 632 531
- EP-A1- 2 098 350
- EP-A2- 1 084 821
- WO-A1-2012/169011
- JP-A- 2008 132 656
- JP-A- 2009 000 741
- DATABASE WPI Week 200905 Thomson Scientific, London, GB; AN 2009-A94787 XP002758763, & JP 2009 000741 A (MITSUBOSHI BELTING LTD) 8 January 2009 (2009-01-08)

## Description

### Technical Field

The present invention relates to hot press cushioning materials. More particularly, the present invention relates to hot press cushioning materials that are used to press-form or thermocompression bond an intended product in a process of manufacturing a precision equipment part such as a printed circuit board like a copper-clad laminate, a flexible printed circuit board, or a multilayer board, an IC card, a liquid crystal display panel, or a ceramic laminate (hereinafter such a precision equipment part is referred to as the "laminate" in the present invention).

### Background Art

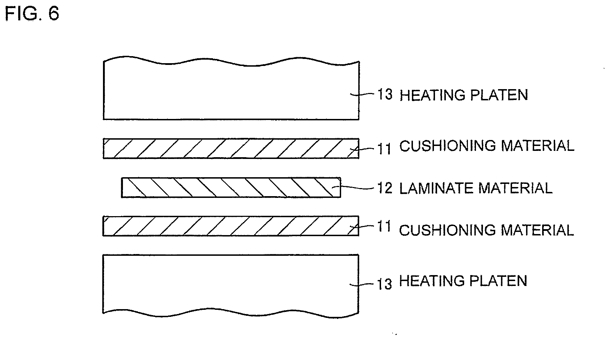

In manufacturing of a laminate such as a printed circuit board, the press-forming or thermocompression bonding process is performed by using a method in which a laminate material 12 as an object to be pressed is interposed between heating platens 13, 13 as heating/pressing means as shown in Fig. 6 and is pressed and heated at a constant pressure and temperature. In order to produce an accurate formed article, it is necessary to uniformly heat and press the entire surface of the laminate material 12 in hot press. For this purpose, a flat plate-like cushioning material 11 is interposed between each heating platen 13 and the laminate material 12 to perform hot press.

Typical characteristics required for the cushioning material 11 include cushioning properties that allow the cushioning material 11 to absorb unevenness of the surfaces of the heating platen 13 and the laminate material 12, in-plane uniformity that allows the cushioning material 11 to uniformly transfer heat and a pressure from the heating platen 13 to the laminate material 12 in the entire press plane, heat transfer capability that allows the cushioning material 11 to efficiently transfer heat from the heating platen 13 to the laminate material 12, heat resistance that allows the cushioning material 11 to withstand a press temperature, etc.

Conventionally, a hot press cushioning material in the form of a plate is cut into a predetermined shape and size. However, the cut edge (end face) of the hot press cushioning material is not subjected to any processing, and is exposed as it is. This may cause fiber fraying or fluffing at the outer edge (end face) of the cushioning material due to friction the edge (end face) of the cushioning material is subjected to when the cushioning material is placed at a predetermined position, or due to a compressive force or impact force that is applied to the cushioning material when in use. Fine fibers that came off from the cushioning material may adhere to the surface of an object to be pressed.

Japanese Unexamined Patent Application Publication No. 2009-741 discloses a technique of preventing fibers forming a multi-ply woven cloth layer or a surface layer from coming off from the edge (end face) of a hot press cushioning material.

### Citation List

### Patent Literature

PTL 1: Japanese Unexamined Patent Publication No. 2009-741

### Summary of Invention

### Technical Problem

The above Japanese Unexamined Patent Publication proposes to coat the ends of the cushioning material with a heat resistant coating material in order to prevent fibers from coming off from the outer edge (end face) of the cushioning material.

However, merely making the coating material adhere to the edge (end face) of the cushioning material cannot sufficiently prevent fibers from coming off from the edge (end face) of the cushioning material because the coating material is easily separated from the edge (end face) of the cushioning material by an impact force etc. that is applied to the cushioning material when in use.

The present invention was developed in order to solve the above problem, and it is an object of the present invention to provide a hot press cushioning material capable of sufficiently preventing fibers from coming off from its edge (end face).

### Solution to Problem

A hot press cushioning material according to the present invention includes: a base material layer being in a form of a plate and containing fibers; and a penetrated portion made of a heat resistant elastic material and formed by causing the heat resistant elastic material to penetrate the base material layer inward from an outer edge (end face) thereof. A penetration depth of the penetrated portion is a distance between two points determined from the outer edge (end face) of the base material layer, the penetration depth is in a range of 0.1 mm to 10.0 mm, both inclusive.

According to the above configuration, a layer of the heat resistant elastic layer has penetrated the base material layer inward from the outer edge (end face) thereof. This can effectively suppress fiber fraying, fluffing, and coming-off of fibers at the edge (end face) of the base material layer. The penetrated portion does not merely adhere to the edge (end face) of the base material layer, but has sufficiently penetrated in the base material layer. Accordingly, the penetrated portion is not separated from the edge (end face) of the base material layer, and fiber fraying etc. at the edge (end face) of the base material layer can be prevented over a long period of time.

In order to suppress separation of the penetrated portion from the edge (end face) of the base material layer, the penetration depth of the penetrated portion need be 0.1 mm or more. An excessively large penetration depth of the penetrated portion increases variation in pressure distribution between a central region and a peripheral edge region of the cushioning material to a laminate material to be pressed. The penetration depth of the penetrated portion needs to be 10.0 mm or less in order to avoid large variation in pressure distribution.

The heat resistant elastic material is used as a material of the penetrated portion in order to maintain heat resistance and cushioning properties as the hot press cushioning material.

In order to effectively suppress fluffing etc. at the edge (end face) of the base material layer, the penetrated portion preferably has a void ratio of 45% or less. If the void ratio is higher than 45%, the force fixing the fibers decreases, and fluffing etc. may not be sufficiently prevented.

The base material layer in a region located inward of the penetrated portion preferably has a void ratio of 20 to 65%. Satisfactory cushioning properties can be obtained if the base material layer has a void ratio in this range. The void ratio is more preferably in a range of 25 to 65%.

A ratio of A/B is preferably 0.1 to 0.9, where A represents a void ratio in the penetrated portion at a distance of 0.1 mm from the outer edge (end face) of the base material layer, and B represents a void ratio in the base material layer at a distance of 20.0 mm from the outer edge (end face) of the base material layer. Any cushioning material that satisfies this relation has satisfactory overall cushioning properties, and can effectively suppress fluffing etc. at the edge (end face) of the base material layer.

The heat resistant elastic material is preferably one kind of rubber or a mixture of two or more kinds of rubber selected from the group consisting of fluoro rubber, EPM, EPDM, hydrogenated nitrile rubber, silicone rubber, acrylic rubber, and butyl rubber.

In order to implement sufficient penetration from the edge (end face) of the base material layer, water-soluble fluoro rubber having its viscosity adjusted to 0.05 to 0.50 Pa·s is preferably used as the heat resistant elastic material.

In order to obtain satisfactory cushioning properties and in-plane uniformity as the hot press cushioning material, the base material layer preferably includes a fiber-rubber composite material layer made of a woven fabric and rubber with which the woven fabric has been impregnated, and texturized or bulky yarn made of glass fibers is used as at least one of warp and weft of the woven fabric. The texturized or bulky yarn is yarn that is formed by arranging short fibers forming glass yarn not in parallel with each other but in an entangled and disordered state, and that occupies a large area. In other words, the texturized or bulky yarn is bulky like wool yarn. Accordingly, unlike normal woven fabrics, the woven fabric using the texturized or bulky yarn contains many voids.

In the case of using the above fiber-rubber composite material layer as the base material layer, the rubber with which the woven fabric is impregnated appropriately enters the voids in the texturized or bulky yarn and voids in the weave of the woven fabric, and the voids are not completely filled with the rubber, so that a certain level of void properties is maintained. Accordingly, satisfactory cushioning properties can be obtained. Moreover, since the base material layer is in the form of a woven fabric produced by weaving the texturized or bulky yarn, basis weight accuracy (uniformity of weight per unit area) is satisfactory as compared to nonwoven fabrics, and great in-plane uniformity can be achieved. Since the base material layer is in the form of a woven fabric, the thickness thereof can be reduced as compared to nonwoven fabrics, and high heat transfer capability can also be achieved.

In a preferred embodiment, the fiber-rubber composite material layer has a void ratio of 20 to 65%, and a volume ratio of the rubber to the fibers forming the woven fabric in the fiber-rubber composite material layer is 5 to 50%. In the case where the volume ratio of the rubber to the fibers forming the woven fabric is in this range, the rubber with which the woven fiber is impregnated appropriately enters the voids in the texturized or bulky yarn and the voids in the weave of the woven fabric, and the voids are not completely filled with the rubber, so that a certain level of void properties can be maintained. If the volume ratio of the rubber is lower than 5%, the cushioning properties can be degraded due to loss of resilience or the cushioning material may become no longer durable due to breakage of the glass fibers after repeated use in hot press. On the other hand, if the volume ratio of the rubber to the fibers forming the woven fabric is higher than 50%, the rubber excessively enters the voids in the texturized or bulky yarn, and the void ratio becomes low, which may degrade the cushioning properties of the cushioning material itself. More preferably, the volume ratio of the rubber to the fibers forming the woven fabric is 5 to 35%.

### Brief Description of Drawings

[Fig. 1] Fig. 1 is an illustrative sectional view of a hot press cushioning material according to an embodiment of the present invention.
[Fig. 2] Fig. 2 is a plan view of the hot press cushioning material according to the embodiment of the present invention, showing the penetration depth of a penetrated portion.
[Fig. 3] Fig. 3 is a view showing textured or bulky yarn.
[Fig. 4] Fig. 4 is a view showing a normal glass fiber.
[Fig. 5] Figs. 5A to 5D show images of a region near the outer edge (end face) of a base material layer, where Fig. 5A shows the embodiment of the present invention, and Figs. 5B, 5C, and 5D show comparative examples.
[Fig. 6] Fig. 6 is a diagram illustrating a hot press process.

### Description of Embodiments

An embodiment of the present invention will be described below.

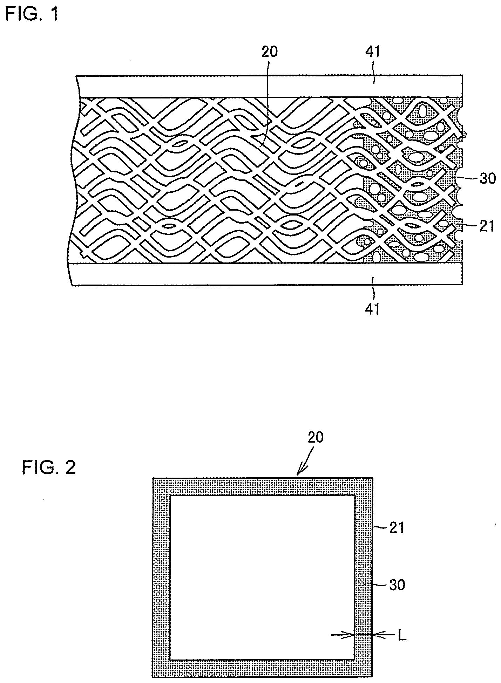

Figs. 1 and 2 show a hot press cushioning material according to an embodiment of the present invention. The hot press cushioning material shown in the figures includes a base material layer 20 being in the form of a plate and containing fibers, a penetrated portion 30 made of a heat resistant elastic material and formed by causing the heat resistant elastic material to penetrate the base material layer 20 inward from an outer edge (end face) 21 thereof, and surface layers 41 located on the uppermost and lowermost surfaces of the base material layer 20. The surface layers 41 are mainly provided so that the hot press cushioning material has release properties. The surface layers 41 are made of a synthetic resin film, a releasable resin coating film, etc.

The base material layer 20 in the embodiment is a layer of a fiber-rubber composite material made of a woven fabric and rubber with which the woven fabric has been impregnated. Texturized or bulky yarn made of glass fibers is used as at least one of the warp and weft of the woven fabric. This fiber-rubber composite material layer has voids therein. The fiber-rubber composite material layer has a thickness of about 0.5 mm to 5 mm, and is in the form of a sheet.

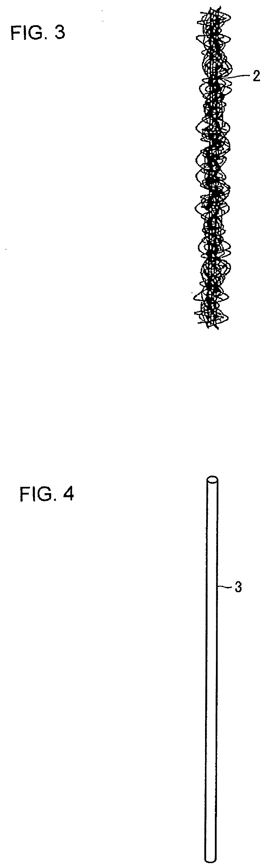

Fig. 3 shows bulky yarn 2 of glass fibers which is preferable as the texturized or bulky yarn as a material forming the base material layer 20. The bulky yarn 2 is processed yarn made bulky like wool yarn by opening fibers of single yarn or bulking double twisted yarn by air-jet processing. Since the bulky yarn 2 has many voids therein, it can be appropriately impregnated with the rubber.

Fig. 4 shows single yarn or double twisted yarn as normal glass fiber yarn 3. The woven fabric in the fiber-rubber composite material layer may be produced either by using the bulky yarn 2 as one of the warp and weft and using the normal glass fiber yarn 3 as the other or by using the bulky yarn 2 as both the warp and weft.

The fiber-rubber composite material layer of the base material layer 20 has a woven fabric and rubber with which the woven fabric has been impregnated. Preferably, the rubber is made to enter the voids in the entire woven fabric so that the volume ratio of the rubber to the fibers forming the woven fabric becomes 5 to 50%. More preferably, the volume ratio of the rubber is 5 to 35%. In the fiber-rubber composite material layer, the voids in the woven fabric are not completely filled with the rubber, and the fiber-rubber composite material layer has a certain level of void properties. The fiber-rubber composite material layer preferably has a void ratio of 20 to 65%, and more preferably 25 to 65%.

As shown in Figs. 1 and 2, the embodiment of the present invention is characterized by including the penetrated portion 30 extending inward from the outer edge (end face) 21 of the base material layer 20 in order to prevent fibers from coming off from the edge (end face) of the cushioning material. The penetration depth L of the penetrated portion 30 as the distance from the outer edge (end face) 21 of the base material layer 20 is in the range of 0.1 mm to 10.0 mm, both inclusive. The penetration depth is set to the range of 0.1 mm to 10.0 mm, both inclusive, in order to suppress separation of the penetrated portion 30 and to avoid large variation in pressure distribution in the entire cushioning material.

Penetration in the penetrated portion 30 reduces the void ratio in the outer edge region of the base material layer 20. Preferably, the void ratio in the region where the penetrated portion 30 is located is 45% or less. If the void ratio in this region is higher than 45%, the force fixing the fibers decreases, and fluffing etc. may not be sufficiently prevented.

In a preferred embodiment, the base material layer 20 is the fiber-rubber composite material layer having voids therein. Both the region where the penetrated portion is located and the region located inward of this region have voids therein. Preferably, the relative ratio of the void ratio in the former region to the void ratio in the latter region is as follows. The ratio of A/B is 0.1 to 0.9, where "A" represents a void ratio in the penetrated portion at a distance of 0.1 mm from the outer edge (end face) of the base material layer 20, and "B" represents a void ratio in the base material layer at a distance of 20.0 mm from the outer edge (end face) of the base material layer. Any cushioning material that satisfies this relation has satisfactory overall cushioning properties, and can effectively suppress fluffing etc. at the edge (end face) of the base material layer.

The heat resistant elastic material forming the permeated portion 30 is preferably one kind of rubber or a mixture of two or more kinds of rubber selected from the group consisting of fluoro rubber, EPM, EPDM, hydrogenated nitrile rubber, silicone rubber, acrylic rubber, and butyl rubber.

In a preferred embodiment, water-soluble fluoro rubber having its viscosity adjusted to 0.05 to 0.50 Pa·s is used as the heat resistant elastic material in order to implement sufficient permeation from the outer edge (end face) of the base material layer 20.

In the case where the base material layer 20 is the fiber-rubber composite material layer, the rubber with which the woven fabric is impregnated is preferably one kind of rubber or a mixture of two or more kinds of rubber selected from the group consisting of fluoro rubber, EPM, EPDM, hydrogenated nitrile rubber, silicone rubber, acrylic rubber, and butyl rubber.

An important characteristic of the embodiment of the present invention is that the penetrated portion made of the heat resistant elastic material is formed in the outer edge region of the base material layer containing fibers. The hot press cushioning material can have various laminated structures. For example, the hot press cushioning material may be formed by a single layer as a base material layer containing fibers, or may have surface layers on the upper and lower surfaces of the base material layer. The hot press cushioning material may be formed by stacking and bonding a plurality of base material layers with an adhesive layer interposed therebetween, or may have any other layer such as a rubber layer or a reinforcing cloth layer interposed between the plurality of base material layers.

### Examples

Glass woven fabrics "T860" using bulky yarn (made by UNITIKA LTD.) were used as a base material layer. The weft of the woven fabrics is bulky yarn formed by texturizing or bulking 305-tex double twisted yarn of 3,200 E-glass fibers (fiber diameter: 6 µm), and the warp thereof is 135-tex non-texturized or non-bulky double twisted yarn of 1,600 E-glass fibers (fiber diameter: 6 µm). The woven fabrics were formed by weaving the warp and weft in double weave. Each of the woven fabrics had a weight of 850 g/m², a thickness of 1.02 mm, and a void ratio of 67%. An unvulcanized fluoro rubber solution was prepared by dissolving unvulcanized fluoro rubber at a predetermined concentration in a solvent prepared by mixing butyl acetate and methyl ketone at a mass ratio of 1 : 1. After immersed in the unvulcanized fluoro rubber solution, each of the glass woven fabrics was squeezed with two rolls. Each of the glass woven fabrics penetrated with the unvulcanized fluoro rubber solution was then sufficiently dried to remove the solvent. Four of the glass woven fabrics thus produced were stacked and bonded together as the base material layer.

As Example of the present invention, a fluoro rubber coating material as a heat resistant elastic material was made to penetrate the base material layer having the four-layer structure from its outer edge (end face), and was then dried and cured. The fluoro rubber coating material used was produced by mixing DAI-EL LATEX GLS-213L liquid A and GL200 liquid B (curing agent) at a mixture ratio of 20 : 1. The fluoro rubber coating material had viscosity of 0.13 Pa·s.

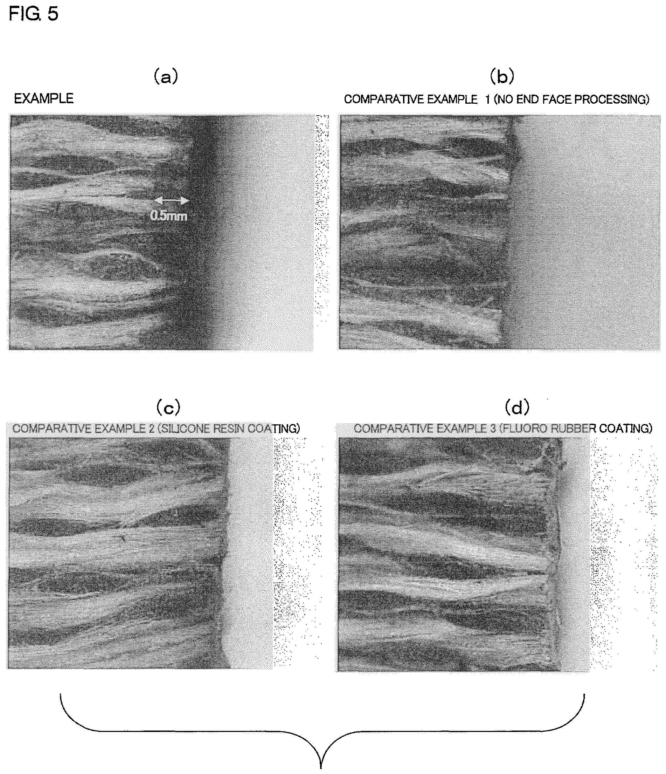

Fig. 5A shows an image of the outer edge region of the base material layer after formation of the penetrated portion. The penetration depth of the penetrated portion was 0.5 mm. The region where the penetrated portion was formed had a void ratio of 36%.

Fig. 5B shows an image of Comparative Example 1, showing an outer edge region of a base material layer having no penetrated portion formed therein.

Fig. 5C shows an image of Comparative Example 2, showing an outer edge region of a base material layer having a four-layer structure, with the edge (end face) of the base material layer coated with liquid silicone resin having viscosity of 20 Pa·s and dried and cured. The coating film adhered to the edge (end face) of the base material layer, and the penetration depth of the coating film inward from the edge (end face) of the base material layer was 0.04 mm.

Fig. 5D shows an image of Comparative Example 3, showing an outer edge region of a base material layer having a four-layer structure, with the edge (end face) of the base material layer coated with a fluoro rubber coating material having viscosity of 11 Pa·s and dried and cured. The coating film adhered to the edge (end face) of the base material layer, and the penetration depth of the coating film inward from the edge (end face) of the base material layer was 0.06 mm.

Each of Example of the present invention and Comparative examples 1, 2, and 3 was subjected to a series of operations, namely press compression, rubbing, and impact, under the conditions described below. Thereafter, each of their edges (end faces) was examined for damage.

Press compression test: While being pressed at 4 MPa by a pressing machine, each sample was heated for 60 minutes at 230°C and then cooled for 10 minutes, and thereafter was released from pressing. This press was repeated one hundred times.

Rubbing test: The end of each sample was pressed against an SUS sheet (SUS304), and while being pressed at 1 kg/cm², was rubbed against the SUS sheet at a stroke of 10 cm so as to make 20 reciprocations.

Impact test: The end of each sample was struck ten times with a pendulum hammer (angle of fall: 90 degrees).

The results are as follows.

The example of the present invention (Fig. 5A) had no problem. That is, there was no fiber fraying or fluffing at the outer edge (end face) of the base material layer.

In Comparative Example 1 (Fig. 5B), fiber fraying or fluffing occured at the edge (end face) of the base material layer, and there were fibers that came off from the edge (end face) of the base material layer.

In Comparative Example 2 (Fig. 5C), the coating film that had adhered to the outer edge (end face) of the base material layer came off, and fiber fraying, fluffing, and coming-off of fibers were not able to be prevented.

In Comparative Example 3 (Fig. 5D), the coating film that had adhered to the outer edge (end face) of the base material layer came off, and fiber fraying, fluffing, and coming-off of fibers were not able to be prevented.

Although the embodiment of the present invention is described above with reference to the drawings, the present invention is not limited to the illustrated embodiment. Various modifications and variations can be made to the illustrated embodiment within a scope that is the same as, or equivalent to, that of the present invention.

### Industrial Applicability

The present invention can be advantageously used as a hot press cushioning material capable of effectively preventing fibers from coming off from its edge (end face).

### Reference Signs List

- 20: base material layer
- 21: outer edge (end face)
- 30: penetrated portion
- 41: surface layer

## Claims

1. A hot press cushioning material, comprising:
a base material layer being in a form of a plate and containing fibers; and
a penetrated portion made of a heat resistant elastic material and formed by causing said heat resistant elastic material to penetrate said base material layer inward from an outer edge thereof, wherein
a penetration depth of said penetrated portion is a distance between two points determined from said outer edge of said base material layer, the penetration depth is in a range of 0.1 mm to 10.0 mm, both inclusive.

2. The hot press cushioning material according to claim 1, wherein
said penetrated portion has a void ratio of 45% or less.

3. The hot press cushioning material according to claim 1 or 2, wherein
said base material layer in a region located inward of said penetrated portion has a void ratio of 20 to 65%.

4. The hot press cushioning material according to any one of claims 1 to 3, wherein
a ratio of A/B is 0.1 to 0.9, where A represents a void ratio in said penetrated portion at a distance of 0.1 mm from said outer edge of said base material layer, and B represents a void ratio in said base material layer at a distance of 20.0 mm from said outer edge of said base material layer.

5. The hot press cushioning material according to any one of claims 1 to 4, wherein
said heat resistant elastic material is one kind of rubber or a mixture of two or more kinds of rubber selected from the group consisting of fluoro rubber, EPM, EPDM, hydrogenated nitrile rubber, silicone rubber, acrylic rubber, and butyl rubber.

6. The hot press cushioning material according to any one of claims 1 to 4, wherein
said heat resistant elastic material is water-soluble fluoro rubber having its viscosity adjusted to 0.05 to 0.50 Pa·s.

7. The hot press cushioning material according to any one of claims 1 to 6, wherein
said base material layer includes a fiber-rubber composite material layer made of a woven fabric and rubber with which said woven fabric has been impregnated, and texturized or bulky yarn made of glass fibers is used as at least one of warp and weft of said woven fabric.

8. The hot press cushioning material according to claim 7, wherein
said fiber-rubber composite material layer has a void ratio of 20 to 65%, and
a volume ratio of said rubber to said fibers forming said woven fabric in said fiber-rubber composite material layer is 5 to 50%.

## Patentansprüche

1. Heisspress-Polstermaterial, umfassend:
eine Basismaterialschicht, die in Form einer Platte vorliegt und Fasern enthält; und
einen eingedrungenen Teil, der aus einem wärmebeständigen elastischen Material besteht und gebildet wird, indem veranlasst wird, dass das wärmebeständige elastische Material in die Basismaterialschicht von deren Außenrand aus eindringt, wobei
eine Eindringtiefe des eingedrungenen Teils eine Distanz zwischen zwei Punkten ist, die vom Außenrand der Basismaterialschicht bestimmt wird, wobei die Eindringtiefe in einem Bereich von 0,1 mm bis 10 mm, beide inklusive, liegt.

2. Heisspress-Polstermaterial nach Anspruch 1, wobei
der eingedrungene Teil ein Hohlraumverhältnis von 45 % oder weniger aufweist.

3. Heisspress-Polstermaterial nach Anspruch 1 oder 2, wobei
die Basismaterialschicht in einem einwärts des eingedrungenen Teils gelegenen Gebiet ein Hohlraumverhältnis von 20 bis 65 % aufweist.

4. Heisspress-Polstermaterial nach einem der Ansprüche 1 bis 3, wobei
ein Verhältnis A/B 0,1 bis 0,9 beträgt, wobei A ein Hohlraumverhältnis im eingedrungenen Teil in einer Distanz von 0,1 mm vom Außenrand der Basismaterialschicht repräsentiert und B ein Hohlraumverhältnis in der Basismaterialschicht in einer Distanz von 20,0 mm vom Außenrand der Basismaterialschicht repräsentiert.

5. Heisspress-Polstermaterial nach einem der Ansprüche 1 bis 4, wobei
das wärmebeständige elastische Material eine Kautschukart oder eine Mischung von zwei oder mehr Kautschukarten ist, die aus der Gruppe ausgewählt werden, die aus Fluorkautschuk, EPM, EPDM, hydriertem Nitrilkautschuk, Silikonkautschuk, Acrylkautschuk und Butylkautschuk besteht.

6. Heisspress-Polstermaterial nach einem der Ansprüche 1 bis 4, wobei
das wärmebeständige elastische Material ein wasserlöslicher Fluorkautschuk ist, wobei dessen Viskosität auf 0,05 bis 0,50 Pa.s eingestellt wurde.

7. Heisspress-Polstermaterial nach einem der Ansprüche 1 bis 6, wobei
die Basismaterialschicht eine Materialschicht aus einem Faser-Kautschuk-Verbund umfasst, die aus einem Gewebe und Kautschuk besteht, mit dem das Gewebe imprägniert wurde, und texturiertes oder dickes Garn, das aus Glasfasern besteht, als zumindest einer des Kett- und Schussfadens des Gewebes verwendet wird.

8. Heisspress-Polstermaterial nach Anspruch 7, wobei
die Materialschicht aus einem Faser-Kautschuk-Verbund ein Hohlraumverhältnis von 20 bis 65 % aufweist und
ein Volumenverhältnis des Kautschuks zu den Fasern, die das Gewebe in der Materialschicht aus einem Faser-Kautschuk-Verbund bilden, 5 bis 50 % beträgt.

## Revendications

1. Matériau amortisseur pour presse à chaud, comprenant :
une couche de matériau de base qui est sous la forme d'une plaque et qui contient des fibres ; et
une partie pénétrée faite d'un matériau élastique résistant à la chaleur et formée par pénétration dudit matériau élastique résistant à la chaleur dans ladite couche de matériau de base vers l'intérieur à partir d'un bord extérieur de celle-ci,
dans lequel la profondeur de pénétration de ladite partie pénétrée est une distance entre deux points déterminée à partir dudit bord extérieur de ladite couche de matériau de base, laquelle profondeur de pénétration est située dans la plage allant de 0,1 mm à 10,0 mm, bornes comprises.

2. Matériau amortisseur pour presse à chaud selon la revendication 1, dans lequel ladite partie pénétrée présente une proportion de vides de 45 % ou moins.

3. Matériau amortisseur pour presse à chaud selon la revendication 1 ou 2, dans lequel ladite couche de matériau de base dans une région située vers l'intérieur de ladite partie pénétrée présente une proportion de vides de 20 à 65 %.

4. Matériau amortisseur pour presse à chaud selon l'une quelconque des revendications 1 à 3, dans lequel le rapport A/B est de 0,1 à 0,9, où A représente la proportion de vides dans ladite partie pénétrée à une distance de 0,1 mm par rapport audit bord extérieur de ladite couche de matériau de base, et B représente la proportion de vides dans ladite couche de matériau de base à une distance de 20,0 mm par rapport audit bord extérieur de ladite couche de matériau de base.

5. Matériau amortisseur pour presse à chaud selon l'une quelconque des revendications 1 à 4, dans lequel ledit matériau élastique résistant à la chaleur est un type de caoutchouc ou un mélange de deux ou plus de deux types de caoutchoucs choisis dans l'ensemble constitué par un caoutchouc fluoré, l'EPM, l'EPDM, un caoutchouc de nitrile hydrogéné, un caoutchouc siliconé, un caoutchouc acrylique, et un caoutchouc de butyle.

6. Matériau amortisseur pour presse à chaud selon l'une quelconque des revendications 1 à 4, dans lequel ledit matériau élastique résistant à la chaleur est un caoutchouc fluoré soluble dans l'eau présentant une viscosité ajustée à une valeur de 0,05 à 0,50 Pa.s.

7. Matériau amortisseur pour presse à chaud selon l'une quelconque des revendications 1 à 6, dans lequel ladite couche de matériau de base comprend une couche de matériau composite de fibres-caoutchouc faite d'une étoffe tissée et de caoutchouc avec lequel ladite étoffe tissée a été imprégnée et texturée, ou bien un fil volumineux fait de fibres de verre est utilisé en tant qu'au moins l'une parmi la chaîne et la trame de ladite étoffe tissée.

8. Matériau amortisseur pour presse à chaud selon la revendication 7, dans lequel ladite couche de matériau composite de fibres-caoutchouc présente une proportion de vides de 20 à 65 %, et le rapport en volume dudit caoutchouc sur lesdites fibres formant ladite étoffe tissée dans ladite couche de matériau composite de fibres-caoutchouc est de 5 à 50 %.
